# EUROPEAN PATENT APPLICATION

(11) **EP 2 220 929 A1**
(43) Date of publication of application: **25.08.2010**
(21) Application number: 09002481.1
(22) Date of filing: 21.02.2009
(51) Int. Cl.: A01F 15/07

(54) **Round baler**

(71) Applicant: DEERE & COMPANY, Moline, Illinois 61265-8098 (US)
(72) Inventor: Braunhardt, Klaus, Ottumwa IA Iowa 52501 (US); Viaud, Jean, 70100 Gray (FR)
(74) Representative: Magin, Ludwig Bernhard

(57) **Abstract**

A round baler (10) has a bale chamber (18) and a storage means (24), whereas latter is used to store crop while a bale (44) in the bale chamber (18) is wrapped and ejected. A passage (84) to the bale chamber (18) is provided separate from an entrance (38), through which a main crop stream is delivered by a main feeder (26). Crop stored in the storage means (24) is back fed to the bale chamber (18) through said passage (84).

## Description

This invention relates to a round baler having a bale chamber and a storage means, whereas the bale chamber has an entrance for crop supplied by a feeder and a mobile roll for partially delimiting the bale chamber on its circumference, whereas said mobile roll is adjustable between a position in which a passage between the bale chamber and the storage means is opened or closed.

EP 149 368 A1 as well as DE 34 15 310 A1 both disclose a round baler with a main and an auxiliary bale chamber, whereas one is made as a variable chamber and the other as a fixed chamber baler surrounded by belts or by rolls respectively. In both cases a little bale is formed in the auxiliary chamber, while a completed bale in the main chamber is wrapped or tied. Once the completed bale is ejected from the main bale chamber the initiated bale is transferred from the auxiliary chamber to the main chamber. Due to the weight of a small bale such transfer is not easy to accomplish.

DE 199 32 336 and EP 337 006 show round balers with a bale chamber and an intermediate storage means, to which crop is fed, while a completed bale is wrapped or tied. As soon as the bale is ejected, the non-baled crop is withdrawn from the storage means and fed to the bale chamber together with the crop picked up from the ground. Feeding this additional amount of crop into the bale chamber may result in crop blockage

The problem this invention is based on is seen in the need to provide for a smooth feed of intermediately stored crop into the bale chamber.

This problem is solved in an innovative way by means of the teaching of claim 1, whereas advantageous features further developing the invention are given in the claims related to claim 1.

By means of this teaching the crop flow from the feeder, like a pick-up of any type is not influenced. The feed rate of the crop retrieved from the storage means may be adjusted to the capability for receiving additional crop in the bale chamber. Such passage can be created in a variable, a fixed or a mixed chamber baler. The passage may be formed by a moveable roll, by moveable belts, chains, a sheet metal, etc. Opening the passage may happen by hydraulic or electro motors, automatically or manually controlled. The size of the storage means may be adapted to the feeding capacity and reach a size, which is enough to contain the mass of an entire bale. The location of the passage is preferably close to the inlet, since this safes time, when net or twine is wound around the bale; in general however the passage may enter into the bale chamber at any suitable place. The round baler may bale crop lying in a windrow on a field, or cotton coming from a harvester, or industrial goods, like garbage, paper, fabric, etc.

A storage inlet for the storage means connected to the feeder but separate from the inlet and the passage again allows a design which fits exactly this purpose and does not need to be a compromise. This inlet may be close to the entrance to the bale chamber or in the case of a longer transportation route between the ground and the bale chamber entrance somewhere on this route. Such inlet may be provided downstream or upstream of a cutter, an auger, a crop treatment device, etc.

If the storage means has an active back-feeder or conveyor to the passage a controlled supply of crop from the storage means to the bale chamber can be achieved. Such a back-feeder could be of any type, like a piston, an auger, a paddle conveyor, but is advantageously of a spiral type belt, chain or web conveyor as this is known from EP 337 006 the content of which is included herewith. Such a spiral type back-feeder avoids a bulk of crop and thus assures an even feeding, whereas the feedrate can easily be controlled by varying the rotation speed of the spiral.

In order to assure, that no crop is fed to the bale chamber, while a bale is tied or wrapped the entrance to the bale chamber or the path between the entrance and the conveyor may be blocked. Crop is best and most reliably routed to the storage means, if the location of the feed channel or its routing is changed accordingly. This may happen by adjusting wall pieces, moving guide elements, like strippers of a cutter, etc.

Another way to route the crop to the storage means rather than to the bale chamber exists in reversing the feeding direction and thus feeding into an inlet which is located upstream of the entrance to the bale chamber.

A conveyor in the inlet/exit area of the storage means is helpful to feed the crop either to the bale chamber or to take it from the feeder. Such a conveyor is able to receive crop from the feeder or the storage conveyor. This conveyor may be a paddle wheel, a belt or slat-chain conveyor, a combination thereof, driven mechanically or hydraulically, etc. Also the drive speed may vary during feeding back.

Feeding the crop into the storage means is easier, if the inlet can be opened and closed or if an existing inlet is enlarged. While a wall, a cover or the like could be used for this purpose, it would reduce costs, if a roll, over which a band of the storage feeder or part of it is routed, or which is the storage feeder can be moved to open or close the inlet.

Since in such a baler feeding happens via three different paths it is important to assure, that none of the paths is blocked because the crop mat is thick at one place and thin at another. For that reason an equalizer is provided, which can be a rotating rake wheel, an oscillating rake, a blower, guide vanes, a tedder wheel etc. While equalization upstream the feeder may work best in most circumstances, it may happen on the feeder or by the feeder, too.

The round baler may be compact, if the same passage can be used to feed twine or net, especially since that passage may still be open from back-feeding the crop.

If the crop is cut before it enters the storage means it will need less volume and is easier to handle.

Hereto after one embodiment of the invention with some alterations is described in more detail and in relation to the drawing. It is shown in:
- Fig. 1: a round baler with a bale chamber and a storage means in side schematic view, both in an empty stage,
- Fig. 2: the round baler of figure 1 with the bale chamber getting filled,
- Fig. 3: the round baler of figure 1 with a full bale chamber, in which a completed bale gets wrapped and crop is fed towards the storage means,
- Fig. 4: the round baler of figure 3, whereas the storage means is filled about the half,
- Fig. 5: the round baler of figure 3, whereas the wrapped bale is ejected and the storage means is filled almost completely,
- Fig. 6: the round baler in a stage, in which crop is fed into the bale chamber from a pick-up as well as from the storage means,
- Fig. 7: a round baler using the same solution of a storage means, however provided with an equalizer in front of the pick-up,
- Fig. 8: the round baler of figure 7 in front view,
- Fig. 9: the round baler of figure 7 in top view,
- Fig. 10: a round baler with a main feeder not being a cutter in an empty state, and
- Fig. 11: the round baler of figure 10 feeding the storage means.

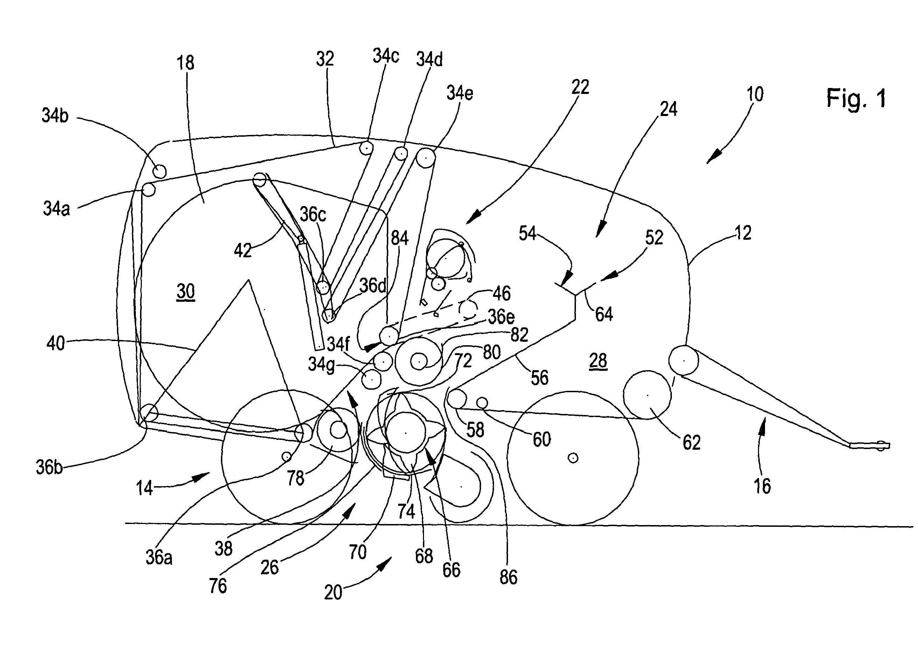

A round baler 10 as shown in figure 1 has a frame 12, a chassis 14, a tongue 16, a bale chamber 18, a pick-up 20, a wrapping device 22, a storage means 24 and a main feeder 26.

The round baler 10 is used to bale preferably agricultural crop lying in a windrow on a field, like straw, hay or silage. This type of round baler 10 is called a non-stop or continuous round baler, since it is able to continue collecting crop, while a completed bale is wrapped or tied. In normal operation said round baler 10 is pulled by a non-shown tractor or the like over a field, which tractor is also used to drive the round baler 10 in an ordinary way.

The frame 12 contains walls 28, braces etc. which are not described in detail. Said frame 12 is carried by the chassis 14 and is connected to the tractor by means of the tongue 16. The components shown in the drawing, like the bale chamber 18, the wrapping device 22 and the storage means 28 are contained between these walls 28.

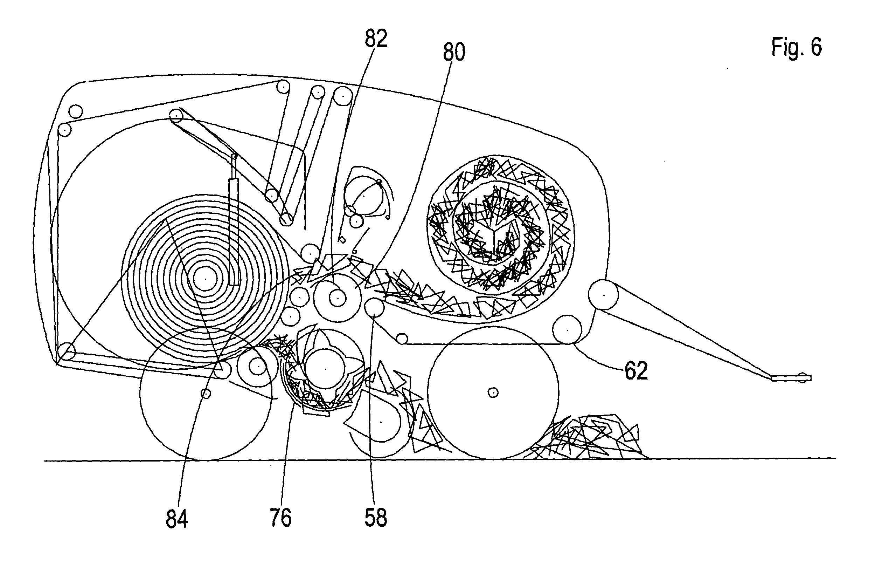

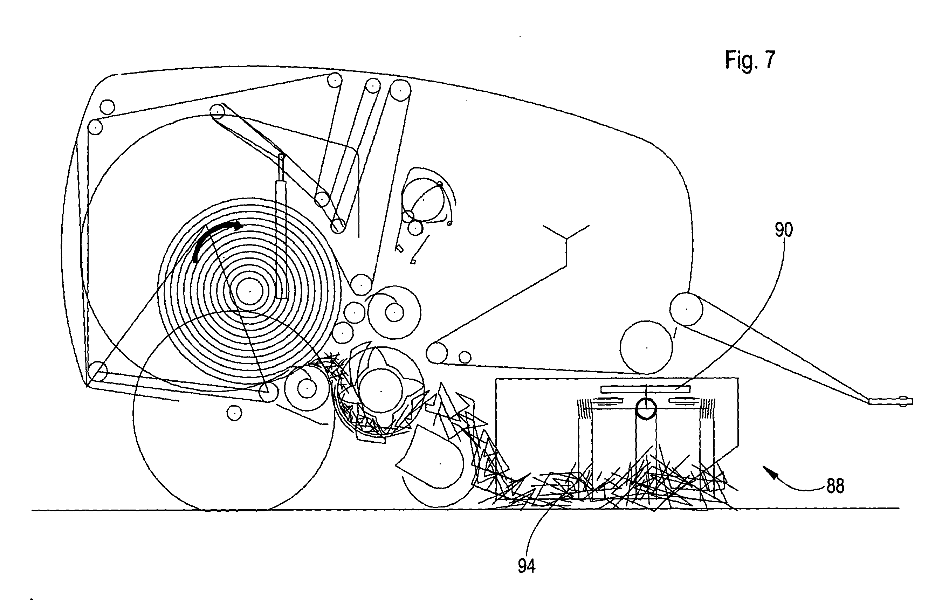

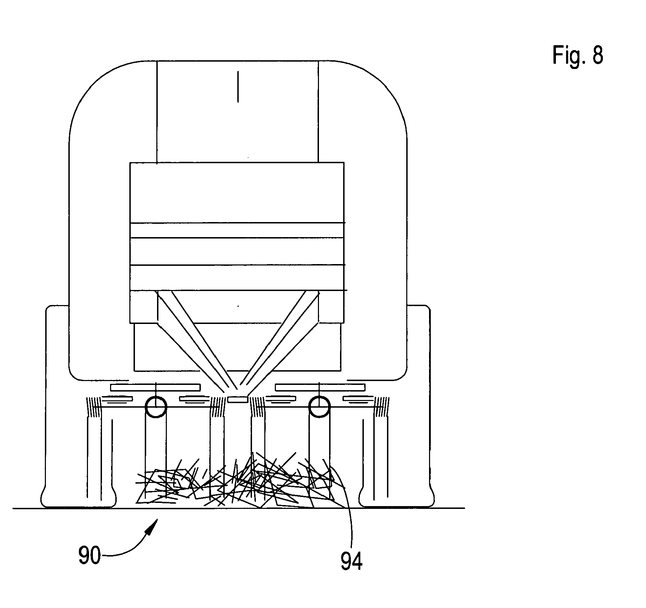

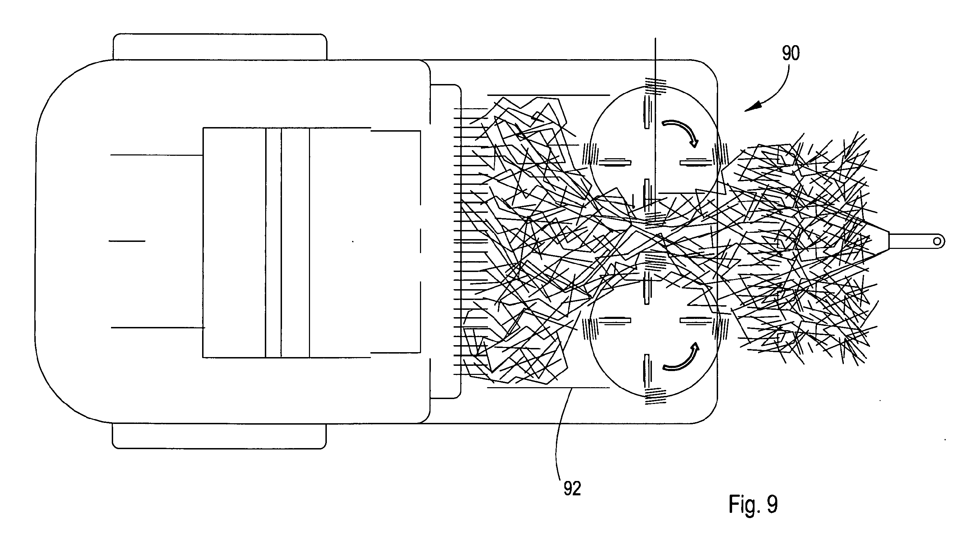

The chassis 14 has two axles with wheels for the embodiment shown in figures 1 to 6, whereas one set of wheels - preferably those in the front - are steerable and which two axles may be far apart as shown or may be of the tandem axle type (not shown). The embodiment shown in figures 7 to 9 uses a single axle with wheels only, which is possible, if the wheels are dimensioned accordingly. The number of axles and wheels is not important for the invention.

The tongue 16 extends along the center plan of the round baler 10 in the front region to the tractor; it may be connected in a fixed or a vertically pivotable way.

The bale chamber 18 shown is formed as one of variable size. While said bale chamber 18 is covered laterally by almost circular side sheets 30, it is covered on its circumference by flexible baling means 32, which may be one or more belts, chains with slats, etc. in one or more sets. Instead of, the bale chamber 18 could be of a fixed size type or of a combination of both. In the shown embodiments a series of immobile rolls 34 and mobile rolls 36 is provided. Looking on the drawing of figure 1, starting at an entrance 38 to the bale chamber 18 and moving in clockwise direction following immobile rolls 34 appear:
- 34a: in an upper rear corner area of the walls 28 outside of the side sheets 30;
- 34b: in an upper rear corner area of the walls 28 outside of the side sheets 30, but slightly above and in front of immobile roll 34a,
- 34c: in an upper middle area of the walls 28 above the front upper corner area of the side sheets 30,
- 34d: in an upper middle area of the walls 28 in about the same height as and in front of immobile roll 34c,
- 34e: in an upper middle area of the walls 28 in about the same height as and in front of immobile roll 34d,
- 34f: in a center area of the walls 28 slightly in the lower half of the bale chamber 18 and
- 34g: in the center area of the walls 28 slightly below and offset towards the rear of immobile roll 34f.

### Looking, starting and moving in the same way, following mobile rolls 36 are present:

- 36a: in a lower front area of a pivot frame 40 being able to pivot substantially about the center of the bale chamber 18, as this is known,
- 36b: in a lower rear area of the pivot frame 40,
- 36c: on a tensioning arm 42 pivotable under control of a hydraulic motor in a vertical plane, whereas it is located a short distance from its free end,
- 36d: on the tensioning arm 42 but located close the free end and
- 36e: slightly above immobile roll 34 f.

The axes of all rolls 34 and 36 are running in parallel and are rotating freely or are driven. The run of the baling means 32 starting from mobile role 36a happens via roll 36b, over immobile roll 34a, under immobile roll 34b, over immobile roll 34c, over mobile roll 36c, immobile roll 34d, mobile roll 36d, immobile roll 34e, under mobile roll 36e and over immobile rolls 34f, 34g to moveable roll 36a. When running over immobile and mobile rolls 34c, 34d, 34f and mobile rolls 36c, 36d two loops are generated, which are used for, either assuming or relieving additional baling means length. A span between immobile roll 34g and mobile roll 36a bridges the entrance 38 and can be pushed into the bale chamber 18 to form a cylindrical space receiving the crop from the pick-up 20. A bale 44 formed inside the bale chamber 18 may assume any wanted diameter up to the size of the side sheets 30.

Mobile roll 36e is carried by arms 46 pivoting along and preferably outside of the side sheets 30. Said arms 46 are controlled by un-shown hydraulic or electric motors and may be kept in end positions by stops (not shown). Moving roll 36e with the arms 46 will provide or close a gap 48 to the adjacent immobile roll 34f.

The pick-up 20 is of ordinary design and either is as wide as the bale chamber 18 or even wider.

The wrapping device 22 is of a type also known in the prior art with a reservoir, a sheet feeder, a knife, etc. Feeding wrapping material 50 happens either manually or automatically controlled depending on the operation mode of the round baler 10. The wrapping device 22 is located in front of the side sheets 30 in about the half of their height and close to the adjacent span of the baling means 32. The wrapping material 50 may be net, twine, plastic or the like.

The storage means 24 is provided in the front half of the round baler 10 between the walls 28. Substantially the storage means 24 is composed of the respective section between the vertical walls 28 and a spiral type storage conveyor 52 containing a rotor 54, a band 56, a moveable roll 58, a fixed roll 60 and a band reservoir 62.

The spiral type storage conveyor 52 provides for a controlled receipt and delivery of the crop coming from main feeder 26 or being fed back to the bale chamber 18. Such spiral type storage conveyor 52 is described in detail in EP 337 006 A1, the content of which is included herein. It is the main purpose to roll a layer of crop in the form of a spiral between strands of the band 56.

The rotor 54 has three equally distant radially extending wings 64, to the end of one of them the band 56 is connected. The rotor 54 can be driven in either direction by a non-shown drive, like a hydraulic motor, a belt drive, an electric motor or the like.

The band 56 preferably, but not necessarily, has a closed surface and is made of reinforced plastic. The band 56 extends over the full width between the walls 28 and is connected with one end to the wing 64 and is rolled on and fixed with its other end to the reservoir 62. Between its ends the band 56 is routed over the rolls 58, 60. The band 56 is constantly under tension built up by the rotor 54 against the retaining force of the reservoir 62.

The moveable roll 58 is located close to and to the upper area of the main feeder 26. The roll 58 is carried with its ends on not shown arms between or outside of the walls 28 for a limited vertical movement. The position of the moveable roll 58 and of the arms can be controlled by motors (not shown) and will depend on the operation mode of the storage means 24, i.e. receiving or delivering crop. In other alternatives the roll 58 may be stationary and guiding the crop may be achieved with other means.

The fixed roll 60 is located close to the moveable roll 58 and between latter and the reservoir 62. It is not really necessary.

The reservoir 62 is formed as a roll on which the band 56 is wrapped; it may be actively driven by a motor (not shown) or rotated against the force of a spring, which will return it and therewith the band 56, to an initial position. The reservoir 62 is located in a front lower area of the walls 28.

The main feeder 26 is formed as a cutting device with a rotor 66, being driven about a horizontal axis transverse to the driving direction of the round baler 10. Said rotor 66 has carriers 68 extending radially for pushing the crop, whereas the carriers 68 cooperate with knives 70 and downstream strippers 72 by rotating through gaps between pairs of them. The knives 70 are connected in a known manner to a frame (not shown) underneath the rotor 66 and protrude through a bent bottom 74, i.e. it has an undershot conveying function. The arrangement of the bottom 74 and the knives 70 is substantially constant, although the knives 70 may escape in the case of an obstacle or they may be brought into a non-operative position, as this is well known. The strippers 72 are moveable on an arc together with a cover 76 having the same shape as the bottom 74. Such movement may be achieved by means of arms or of a guide (not shown) outside the walls 28 and will be explained later. In one position of the strippers 72 and the cover 76 the crop can be delivered to the entrance 38, i.e. the strippers 72 are located in an approximately 11 'o clock position, whereas the cover 76 overlaps entirely or almost entirely the bottom 74. In another end position the cover 76 blocks the exit to the entrance 38 and the strippers 72 assume a 2-3 'o clock position close to the moveable roll 58. In this second end position the main feeder 26 may feed crop into the storage means 24.

In addition a conveyor 78 is provided between the main feeder 26 and mobile roll 36a. This conveyor 78 helps to deliver crop into the entrance 38 and - in a case with a main feeder 26 wider than the bale chamber 18 - it may contain even an auger segment, which helps to move the crop axially, besides the tangential movement. The location of this conveyor 78 is fixed and helps to start the building of a bale core.

Further in addition is provided a conveyor 80 with an assigned deflector 82 between roles 36e, 34f and 58. The location of this conveyor 80 is stationary and thus the relationship to rolls 34f and 34g will not change. However, the relationship of this conveyor 80 will change with respect to roll 36e, when a passage 84 at the gap 48 is formed due to an upward movement of roll 36e or when a storage inlet 86 is formed due to the downward movement of the moveable roll 58. The deflector 82 may be a bent sheet metal running on part of a spiral path from a core of the conveyor 80, being formed as a roll. This deflector 82 will help to feed the crop into the storage means 24 or from latter to the passage 84. The deflector 82 may be moved by means of a guide on a circular path, by arms, linkages etc. controlled by a motor (not shown).

Finally and with reference to figures 7 to 10 an equalizer 88 is provided in front of the pick-up 20 and underneath the front part of the storage means 24. Said equalizer 88 is not mandatory but helpful in order to achieve an even thickness of the crop mat received by the pick-up 20. Substantially the equalizer 88 works like a tedder forming a uniform windrow. The equalizer 88 has two tine rotors 90 and two guide walls 92. Each tine rotor 90 is driven mechanically, hydraulically or electrically and rotates about a vertical axis. It extends from the underside of the frame 12 in its front region to almost the ground on which the crop is lying. The diameter and location of the tine rotors 90 is chosen such, that their outer edges are further apart than those of the crop on the ground and their inner edges leave sufficient space to move the crop between them from the front to the rear. The tine rotors 90 rotate inwardly at the front and have sets of elastic tines 94, the position of which can be controlled to provide for a smooth crop delivery at the rear. The guide walls 92 extend between the tine rotors 90 and the pick-up 20 at a distance similar to the pick-up width. These guide walls 92 assure that the crop is not propelled outwards at the delivery side of the tine rotors 90.

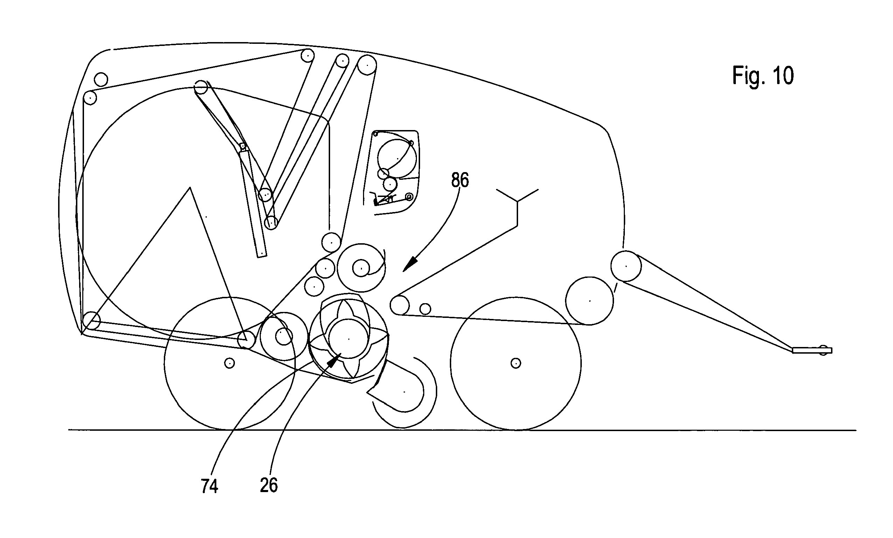

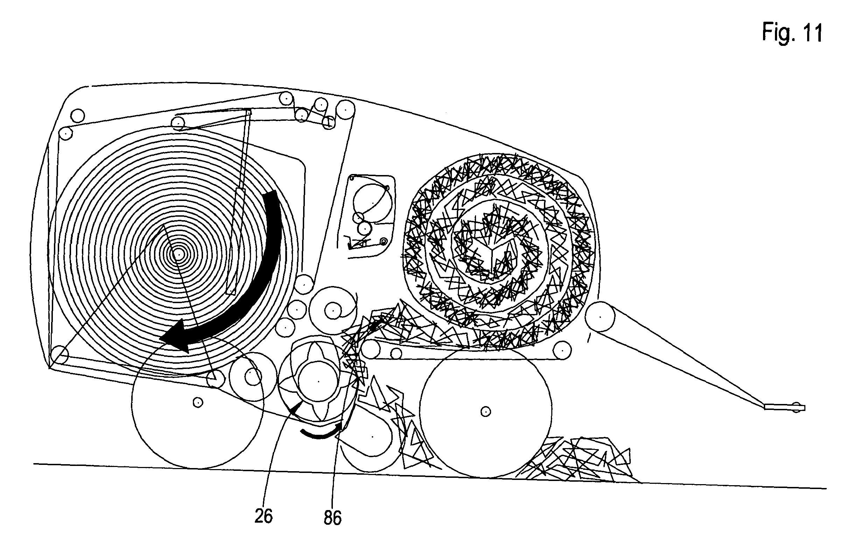

The embodiment shown in figures 10 and 11 differentiates from that in figures 1 to 9 insofar, as the main feeder 26 is not formed as a cutting device, i.e. the knives 70 and strippers 72, but also the cover 76 are missing, and it can be driven in clockwise as well as counterclockwise direction.

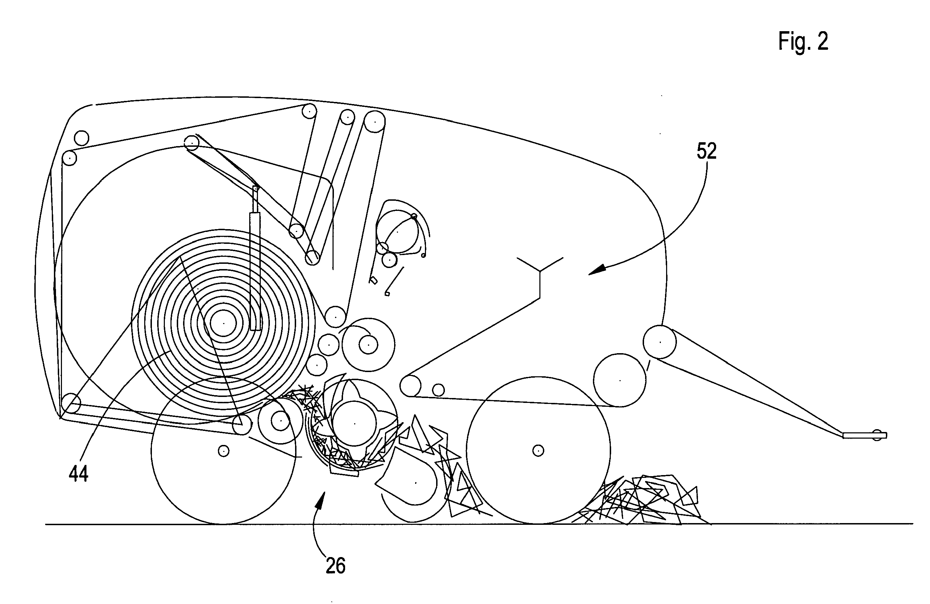

The following description of the function starts from the situation shown in figure 2, which corresponds with that of figure 7, whereas in latter the equalizer is used in addition.

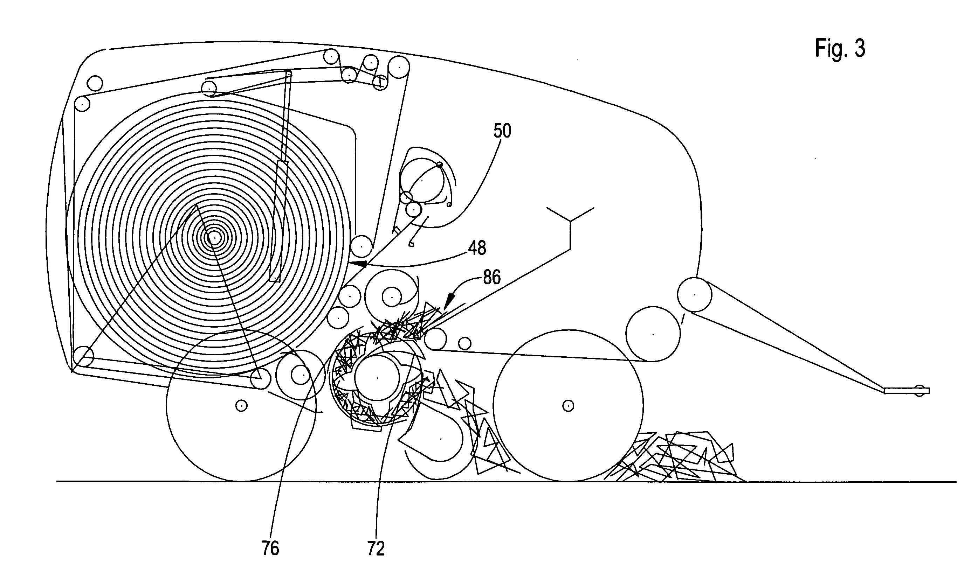

Crop is taken up by the pick-up 20, fed to the main feeder 26, eventually cut there and delivered through entrance 38 into the bale chamber 18, where its rotational movement in clockwise direction is started by conveyor 78, the adjacent span of the baling means 32 and roll 34g. The strippers 72 are in their rearward and the cover 76 is in its downward position. Roll 36e is adjacent to roll 34f and thus the passage 84 is closed. A bale 44 is started and is growing against the tension in the baling means 32, which is upheld by the resistance build up from the tensioning arm 42. Once the bale chamber 18 is filled or a bale 44 has reached its desired size, as this is shown in figure 3. At this stage, where no further crop shall be supplied to the bale chamber 18, the cover 76 and with it the strippers 72 are moved in clockwise direction as seen in figure 3 to block the path to the entrance 38 and supply the crop through the storage inlet 86 to the storage means 24, where it is placed on top of the band 56 being pulled by the rotor 54, which runs counterclockwise. In this situation the deflector 82 is in its downward position to depress the crop slightly for forming a mat. Since the bale 44 is ready the wrapping device 22 is activated and net or twine is delivered to be wrapped onto its circumference. In order to feed the wrapping material 50 into the gap between the bale 44 and the inner surface of the rolls 34 and baling means 32, mobile roll 36e is moved upwardly to create the passage 84, through which the wrapping material 50 may enter.

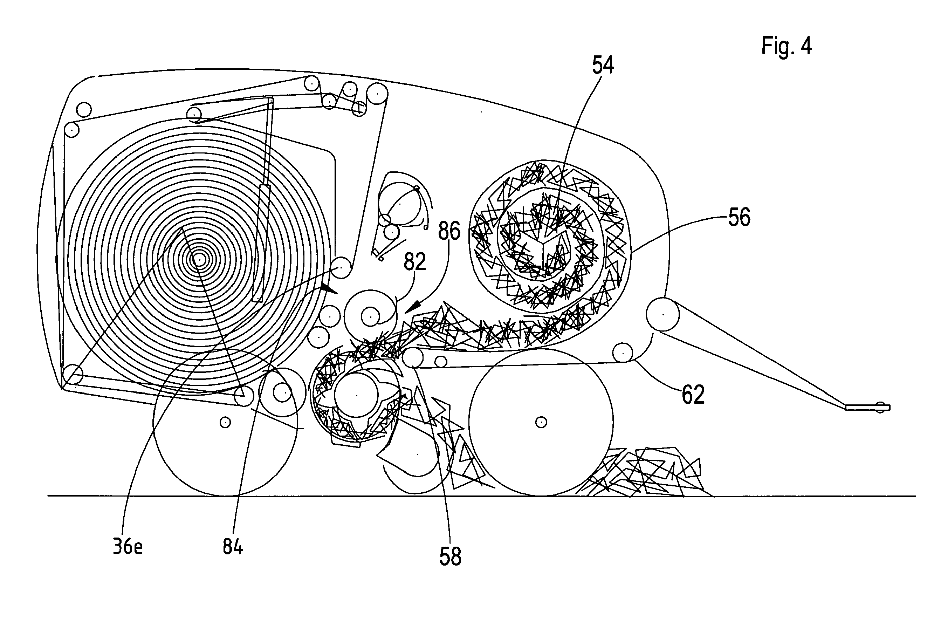

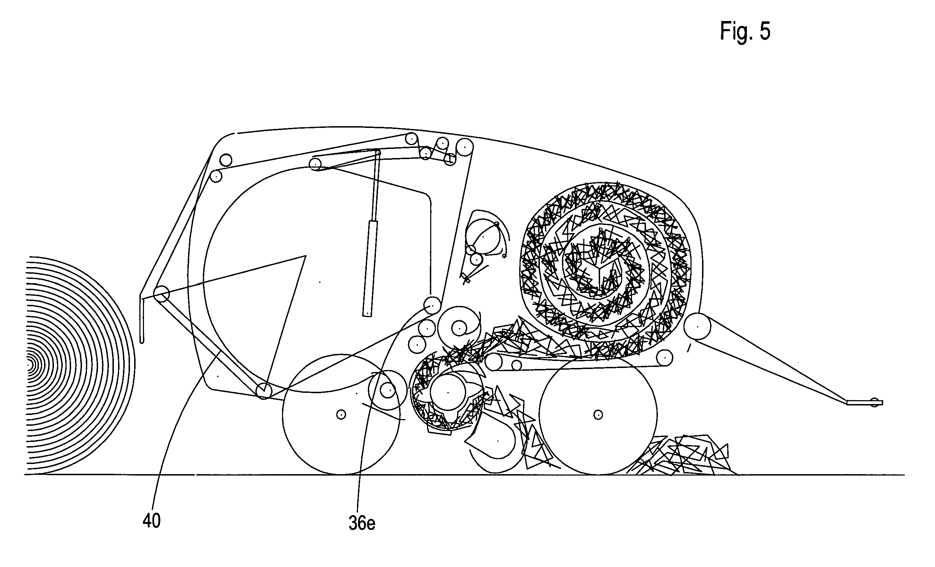

Figure 4 shows, that the crop is rolled as a spiral between distant runs of the band 56. In a situation shown in figure 5 the bale 44 is ejected by lifting the swinging pivot frame 44 in clockwise direction and said pivot frame 44 already returns to its start position, where the bale chamber 18 is closed and ready to receive crop. The passage 84 has been closed again, since bale wrapping is completed and crop is still given to the storage means 24, in which the spiral formed by layers of crop and band 56 is growing. With growing spiral the band 56 is pulled by the rotor 54 from the band reservoir 62. Once the pivot frame 40 is back in its home position, the cover 76 with the strippers 72 is swung down to open the exit to the entrance 38 and start building a bale core. At the same time mobile roll 36e is moved upwardly to open the passage 84 and let crop enter the bale chamber 18 above the entrance 38. Said crop is supplied by the unrolling spiral, which is performed by the band reservoir 62, which now pulls the band 56 and thus moves the crop out of the storage means 24 to the rear. In order to provide for a proper crop flow the deflector 82 is moved counterclockwise to bridge a gap between roll 34f and conveyor 80. Also, moveable roll 58 is moved upwardly to assure that the crop coming from the band 56 is reaching the conveyor 80. This delivery of crop continues until the storage means 24 is empty. The same function applies to the embodiment shown in figures 7 to 9, in which the equalizer 88 is added. This equalizer 88 distributes the crop evenly in front of the pick-up 20 by means of the rotating tine rotors 90.

The same function is obtained with the embodiment shown in figures 10 and 11, whereas for feeding the storage means 24 only the moveable roll 58 is lowered to open the storage inlet 86 and the sense of rotation of rotor 54 is reversed such, that crop is not delivered undershot to the entrance 38 but overshot to the storage inlet 86.

## Claims

1. Round baler (10) having a bale chamber (18) and a storage means (24), whereas the bale chamber (18) has an entrance (38) for crop supplied by a feeder (26) and a mobile roll (36e) for partially delimiting the bale chamber (18) on its circumference, whereas said mobile roll (36e) is adjustable between a position in which a passage (84) between the bale chamber (18) and the storage means (24) is opened or closed, **characterized in that** said passage (84) is created at a place different from the crop entrance (38).

2. Round baler according to claim 1, **characterized in that** said storage means (24) has a storage inlet (86) connected to the feeder (26) but separate from the entrance (38) and the passage (84).

3. Round baler according to claim 1 or 2, **characterized in that** said storage means (24) has an active storage conveyor (52) to the passage (84), advantageously being a spiral type belt, chain or web conveyor.

4. Round baler according to one or more of the preceding claims, **characterized in that** the entrance (38) to the bale chamber (18) or the path to the entrance (38) may be closed while feeding crop to the storage means (24) and a feed channel may be extended to the storage inlet (86).

5. Round baler according to one or more of the preceding claims, **characterized in that** the feeder (26) may be changed to reverse his conveying direction towards the storage inlet (86) rather than towards the entrance (38) to the bale chamber (18).

6. Round baler according to one or more of the preceding claims, **characterized in that** a conveyor (80) is provided at the storage inlet (86) to transport crop to the passage (86) or from the feeder (26).

7. Round baler according to one or more of the preceding claims, **characterized in that** the storage inlet (86) to the storage means (24) can be closed or opened preferably by a roll (58) routing a band (56) of said storage conveyor (52).

8. Round baler according to one or more of the preceding claims, **characterized in that** upstream of the feeder (26) an equalizer (88) is provided, distributing the crop substantially even across the width of the entrance (38) to bale chamber (18) and/or the storage means (24).

9. Round baler according to one or more of the preceding claims, **characterized in that** said passage (84) is useful to insert wrapping material (50) into the bale chamber (18).

10. Round baler according to one or more of the preceding claims, **characterized in that** the feeder (26) is formed as a cutter.
